# EUROPEAN PATENT SPECIFICATION

(11) **EP 1 190 034 B1**
(45) Date of publication and mention of the grant of the patent: **03.11.2004**
(21) Application number: 00944471.2
(22) Date of filing: 30.06.2000
(51) Int. Cl.: C11D 3/39, C11D 3/22, D06L 3/02, C08B 37/18, C07H 15/04

(54) **BLEACH ACTIVATOR BASED ON INULIN**
BLEICHAKTIVATOR AUF BASIS VON INULIN
ACTIVATEUR DE BLANCHIMENT A BASE D'INULINE

(30) Priority: 30.06.1999 NL 1012482
(43) Date of publication of application: 27.03.2002
(73) Proprietor: Coöperatie Cosun U.A., 4700 BH Roosendaal (NL)
(72) Inventor: BOLKENBAAS, Mari[tte, Ellen, Boukje, NL-4307 AA Oosterland (NL); RAAIJMAKERS, Henricus, Wilhelmus, Carolina, NL-4708 HD Roosendaal (NL); KUZEE, Hendrika, Cornelia, NL-4388 CB Oost-Souburg (NL); VAN DOREN, Hendrik, Arend, NL-3818 ZE Amersfoort (NL); HAAKSMAN, Ingrid, Karin, NL-3823 KG Amersfoort (NL)
(74) Representative: van Westenbrugge, Andries
(86) International application number: PCT/NL2000/000462
(87) International publication number: WO 2001/000771

(56) References cited:
- EP-A- 0 792 888
- EP-A- 0 814 088
- WO-A-93/01200
- WO-A-96/34934
- BERGHOFER E ET AL: "CHEMICAL MODIFICATION OF CHICORY ROOT INULIN" , STUDIES IN PLANT SCIENCE,NL,AMSTERDAM, ELSEVIER, VOL. VOL. 3, PAGE(S) 135-142 XP002031614 page 136, line 1 -page 137, line 5 page 137, line 35 -page 138, line 13

## Description

The invention relates to the use of fructan derivatives as a bleach activator.

In addition to a bleaching agent, such as a peroxide, percarbonate or perborate, a bleach activator is usually needed for bleaching, for example, textile materials in the washing process. The most widely used bleach activator is tetraacetylethylenediamine (TAED). The disadvantage of TAED is that it is moderately to poorly biodegradable and is thus an undesired constituent in waste water. The use of acetylated sucrose (degree of substitution 4.5 - 7), in particular hexa-acetylsucrose, as bleach activator is disclosed in EP-A 492 000. Peracetylated sugar acids (sucrose, maltose, lactose) having a bleach-activating action are disclosed in EP-A 731 161. Acetylated carboxymethylinulin derivatives which are said to have a bleach-activating action are described in EP-A 814 088.

It has been found that acylated fructans and fructan derivatives are outstandingly suitable as a bleach activator, having an activity comparable to that of TAED and having much better biodegradability. The acylated fructans and fructan derivatives to be used according to the invention have an average degree of substitution (in acyl groups) of 0.4 - 2.5, preferably of 0.6 - 1.8 and preferentially of 0.8 - 1.6. Surprisingly the bleach-activating action of the acylated inulins according to the invention is also found to be better than that of the comparable acylated carboxymethylinulins according to EP-A 814 088. The acyl groups in the acylated fructan according to the invention are preferably derived from monocarboxylic acids and can be acetyl, propionyl, butyryl and higher alkanoyl groups (for example up to C12, in particular up to C6) and optionally formyl, alkenoyl, pyruvyl and benzoyl groups and the like, including mixtures, for example of acetyl and propionyl groups, both within a molecule (acetylpropionylfructan) and of different substances (acetylfructan and propionylfructan), as long as the total or average degree of substitution is within the set limits. More preferably, the fraction is acylated with C₁-C₆ acyl groups.

Acylated inulin is known per se from EP-A 792 888. The acylated inulins described in this publication preferably have a degree of substitution of 0.5 or less and are proposed as a surfactant.

Here fructans are understood to be all oligosaccharides and polysaccharides which have a majority of anhydrofructose units. The fructans can have a polydisperse chain length distribution and can be straight-chain or branched. The fructans comprise both products obtainable directly from a vegetable or other source and the products in which the average chain length has been modified (increased or reduced) by fractionation, enzymatic hydrolysis or synthesis. The fructans have an average chain length (= degree of polymerisation, DP) of at least 3, up to about 1000, in particular of 3 to 60 monosaccharide units, more particularly 4-30 units. Preferably the fructan contains mainly β-2,1 bonds, as in inulin. Inulin can be obtained, inter alia, from chicory, dahlias and Jerusalem artichokes.

Acylated reduced fructans can also be used. Reduced fructans are fructans in which reducing end groups (usually fructose groups) have been reduced, for example using sodium borohydride or using hydrogen in the presence of a transition metal catalyst.

Furthermore, chemically or physically modified fructans can serve as the basis for acylated derivatives. The chemical modification corresponds to a degree of substitution in the modification of less than 0.5, in particular less than 0.2. The modification can be, for example, an alkyl group, hydroxyalkyl group, carboxyalkyl group, alkoxycarbonylalkyl group, carboxyl group, alkoxycarbonyl group, aminoalkyl group or acylamino group.

Various methods of preparation for acylated fructans and fructan derivatives are available. Reaction of carboxymethylinulin (DS 1.0) with excess acetic anhydride in the presence of sodium acetate at 120 °C (analogous to Example 12 in EP 792 888) yields a product which has a relatively low content of acetyl groups (DS acetyl = 0.78). Virtually complete acetylation in good yield (89%) can be achieved by carrying out this reaction at 140 °C (analogous to the R.L. Whistler method, *Methods in Carbohydrate Chemistry*, Vol II, 211-212). Reference may also be made to the method disclosed E. Berghofer et al., Theorical Modification of Chicory Root Insulin, Studios in Plant Science, Vol. III, 135-142.

It has been found that the reaction of fructans and fructan derivatives with acetic anhydride in water at controlled pH is an exceptionally suitable method for the preparation of partially acylated fructans and fructan derivatives. The pH is kept constant at a value of between 7 and 9, preferably of about 8, during the reaction. The reaction temperature is between 0 and 80 °C, preferably between 0 and 40 °C. This method results in the formation of partially acylated fructans and fructan derivatives in good yield (85 - 95%) and with a high reaction efficiency (50 - 75%); the reaction efficiency is defined as the degree of acylation determined divided by the maximum degree of acylation calculated on the basis of the quantity of acylating agent (DS_{det}/DSₜₕₑₒᵣ x 100%). Instead of acid anhydrides it is also possible to use other reactive acyl derivatives, such as acid halides, reactive esters, in particular vinyl esters, such as vinyl acetate and vinyl propionate, for the acylation.

It has been found that the partial acetylation of carboxymethylinulin (CMI) in a mixture of acetic acid, acetic anhydride and sulphuric acid analogous to EP 814 088 leads only to a product in low yield (41 %) and with a low reaction efficiency (8%).

The bleach activator property is determined on the basis of the quantity of peracetic acid that can be liberated from the product. It has been found that the bleach activator properties of the (partially) acylated fructans and fructan derivatives depend on the method by which the acylation has been carried out. The best characteristics are found when the acylation is carried out in water at controlled pH (Table 1).

The acetylation of CMI with acetic anhydride, acetic acid and sulphuric acid (EP 814 088) or acetic anhydride and sodium acetate at elevated temperature yields products which have poor solubility in water and low activity as bleach activator.

Partial acylation of CMI by reaction of CMI with acetic anhydride in water at controlled pH gives products which have adequate solubility in water and better results in the bleach activator test. The solubility in water is appreciably higher than that of corresponding products prepared in accordance with the prior art. The invention also relates to such an acylation method and to the products having a solubility in water of at least 1g/l which are obtainable in this way.

Surprisingly it has been found that the lower the degree of substitution of carboxymethyl groups in partially acetylated CMI the better is the action as bleach activator. Preferably partially acetylated CMI having a degree of substitution of carboxymethyl groups of less than 0.2 is used.

For partially acetylated inulin (no carboxyl groups present) it is found that the solubility of the products obtained is good up to a DS_{acetyl} of 2.0. The bleach activator action of these compounds is better than that of partially acetylated CMI. The action of partially acetylated inulin having a DS of 1.7 approaches the action of TAED and SORMAN. A possible explanation for these results is that the bleach activator action appears to be determined by the solubility in water and the availability of the acetyl groups. The mol % peracetate formed is a measure of the availability of the acetyl groups. Poor solubility in water gives low availability of the acetyl groups for peracetate formation.

**Table 1:**

| *Solubility and bleach activator action of partially acetylated CMI, partially acetylated inulin, SORMAN and TAED on the basis of amount of peracetate liberated* | | | | | |
|---|---|---|---|---|---|
| DS (carboxymethyl) | DS (acetyl) | Synthesis method¹ | Solubility (%) | Peracetate formed (mol%)² | mol peracetate/ kg product |
| 1 | 0.51 | A | <0.1 | 39 | 0.8 |
| 1 | 1.05 | B | <0.1 | 17 | 0.5 |
| 1 | 1.5 | C | <0.1 | 20 | 1.0 |
| 0.2 | 0.66 | D | >5 | 67 | 2.1 |
| 0.85 | 0.73 | D | >5 | 51 | 1.4 |
| 1.5 | 1.12 | D | >5 | 16 | 0.5 |
| 0 | 0.58 | D | >5 | 73 | 2.3 |
| 0 | 1.01 | D | >5 | 74 | 3.7 |
| 0 | 1.53 | D | >5 | 73 | 5.0 |
| 0 | 1.71 | D | >5 | 71 | 5.2 |
| 0 | 3.0 | C | <0.1 | 4 | 0.1 |
| 0 | 0 | - | 10 | - | - |
| 1 | 0 | - | 50 | - | - |

| Comparison: | | | | | |
|---|---|---|---|---|---|
| TAED³ | 4.0 | - | 0.1 | 45 | 7.9 |
| SORMAN⁴ | 6.0 | - | 0.1 | 44 | 6.0 |

| | | | | | |
|---|---|---|---|---|---|
| 1: A: AcOH/Ac₂O/H₂SO₄, 50 °C, 3 hours; B: Ac₂O/NaOAc, 120 °C, 4 hours; C: Ac₂O/NaOAc, 140 °C, 4 hours; D: Ac₂O/H₂O, pH 8, 25 °C. | | | | | |
| 2: 100 x number of mols of peracetate formed / total number of mols of acetyl groups in product. | | | | | |
| 3: tetraacetylethylenediamine | | | | | |
| 4: mixture of peracetylsorbitol and peracetylmannitol (EP 525 239) | | | | | |

It can clearly be seen from Table 1 that the presence of carboxyl groups in the inulin molecule has an adverse effect on the availability of the acetyl groups for peracetate formation. The quantity of peracetate/kg product is also adversely affected as a result.

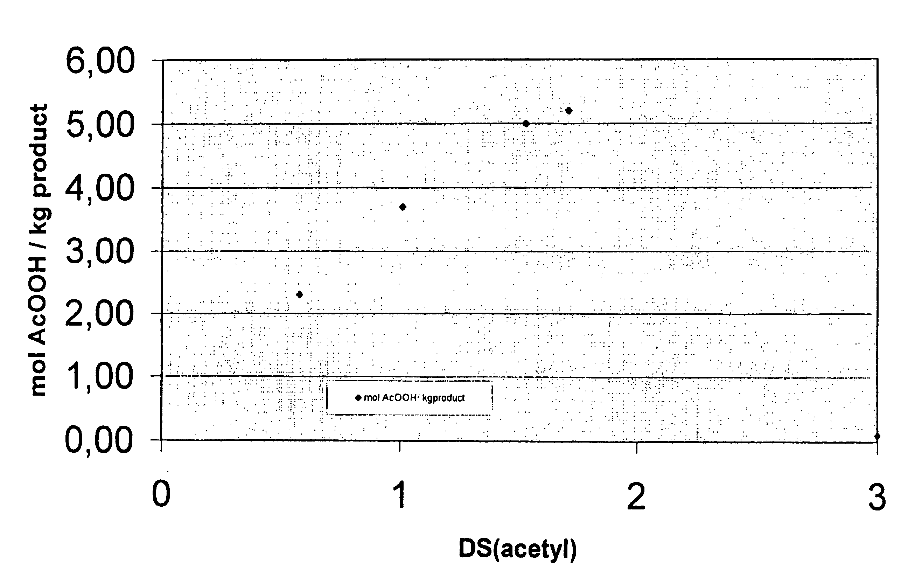

For partially acetylated inulin the availability of the acetyl groups is virtually independent of the degree of acetylation to a maximum DS of approximately 2. This means that the quantity of peracetate per kg product increases virtually in proportion with the degree of substitution (Figure 1). Above DS 2 the solubility, and thus also the availability of acetyl groups for peracetate formation, decreases again.

Compared with TAED and SORMAN, the availability of the acetyl groups in partially acetylated inulin is substantially higher and therefore if the degree of acetylation is sufficiently high the peracetate formation per kg approaches that of TAED. The high availability of acetyl groups in the partially acetylated inulin appears to be a unique property of this inulin derivative. Figure 1 shows a plot of the number of mols of peracetic acid per kg product against the DS_{acetyl}.

### Example 1: Acetylation of inulin, DS 1.0

50 ml water was added to 30 g inulin (185 mmol, chicory, DP ≈10), after which the mixture was homogenised and adjusted to pH 8 with 2M NaOH. 28 ml (296 mmol) acetic anhydride was added dropwise to the mixture at room temperature whilst the pH was kept at 8 using a pH-stat with the addition of 10M NaOH solution. The temperature was kept at 25 °C. 15 minutes after all the acetic anhydride had been added, the solution was diluted with water to a volume of approximately 500 ml and the pH was adjusted to 6. After standing overnight the precipitate was filtered off. The filtrate was purified by nanofiltration. The filtrate from the nanofiltration was concentrated (Rotavapor) and the residue was dried in a vacuum oven at 70 °C. Yield: 36.25 g (95%) with a DS (degree of substitution) in acetyl of 1.01. Reaction efficiency: 63%. The product had a surface tension (1% g/g solution at 30 °C) of 47.78 ± 0.06 mN/m. The product released an amount of peracetate (in mol%, determined in accordance with the procedure as described in Example 9) of 74 mol% or 3.7 mol peracetate per kg product.

### Example 2: Acetylation of inulin, DS 0.5

Example 1 was repeated, but using 15 ml (159 mmol) acetic anhydride. DS: 0.51; yield: 98%; reaction efficiency: 73%.

### Example 3: Acetylation of inulin, DS 1.5

Example 1 was repeated, but using 58 ml (613 mmol) acetic anhydride. DS: 1.51; yield: 84%; reaction efficiency: 53%.

### Example 4: Acetylation of carboxymethylinulin

218 g acetic anhydride was added dropwise to a solution of 150 g carboxymethylinulin (CMI, DS 0.88) in the course of 3 hours whilst the pH was kept at 8 using 10M NaOH and the temperature was kept at 25 °C. 15 minutes after all the acetic anhydride had been added the solution was diluted with water to a volume of approximately 2.3 l and the pH was adjusted to 6. After standing overnight the precipitate was filtered off. The filtrate was purified by electrodialysis. The product was concentrated (Rotavapor) and the residue was dried in a vacuum oven at 70 °C. Yield: 134.6 g (74%) with a DS (degree of substitution) in acetyl of 1.2. Reaction efficiency: 63%.

### Example 5: Acetylation of inulin with NaOAc in acetic anhydride at 140 °C

A suspension of inulin (30 g) and sodium acetate (3 g) in acetic anhydride (150 ml) was heated (140 °C, 4 hours). The hot reaction mixture was poured into ice-water (approximately 2 1) and stirred overnight. The resulting precipitate was filtered off and dried in air. Yield: 47.2 g (89%). DS_{acetyl}: 3.0. Reaction efficiency: 38%.

### Comparative Example A: Acetylation of carboxymethylinulin in an acid medium

A mixture of acetic anhydride (25 ml) and acetic acid (10 ml, 100%) was added dropwise to a solution of CMI (DS 1.0; 10 g) in acetic acid (50 ml, 100%) and concentrated sulphuric acid (0.3 ml) and the mixture was then stirred (3 hours, 50 °C). The solution was cooled and filtered through a glass filter. The residue was washed (400 ml acetone/water (3:1)). After removing acetone from the combined filtrates (Rotavapor) the product was desalinated by means of nanofiltration. The residue was freeze-dried. Yield: 5.8 g (53%). DS_{acetyl}: 0.49. Reaction efficiency: 8%.

### Comparative Example B: Acetylation of CMI DS 1. 0 with NaOAc and acetic anhydride at 120 °C

A suspension of CMI (10 g, DS 1.0) and sodium acetate (0.5 g) in acetic anhydride (50 ml) was heated (120°C, 4 hours). After cooling to room temperature the precipitate was removed by means of filtration and the residue was washed with acetic anhydride. The filtrate was concentrated under vacuum (Rotavapor). The residue was then taken up in water and freeze-dried. Yield: 7.7 g (68%). DS_{acetyl}: 0.78. Reaction efficiency: 7%.

### Comparative Example C: Acetylation of CMI (DS 1.0) with NaOAc in acetic anhydride at 140 °C

Example 5 was carried out using CMI (10 g, DS 1.0), sodium acetate (0.5 g) and acetic anhydride (50 ml). Yield: 27.7 g (73%). DS_{acetyl}: 1.5. Reaction efficiency: 13%.

### Example 6: Propionylation of inulin

50 ml water was added to 30 g inulin (185 mmol, chicory, DP ≈ 10), after which the mixture was homogenised and the pH was adjusted to 8 with 10M NaOH. 50 ml (388 mmol) propionic anhydride was added dropwise to the mixture at room temperature whilst the pH was kept at 8 and the temperature was kept at 25 °C. After standing overnight the precipitate was separated off, rinsed with water and filtered off. The residue was dried in air. Yield 41.0 g (92%) with a DS (degree of substitution) in propionyl of 1.41. Reaction efficiency: 67%.

### Comparative Example D: Reproduction of Example 14 in EP-A 792 888

15 g (0.09 mol) inulin was dissolved in 250 ml water. 12.3 ml (0.09 mol) propionic anhydride and 300 g Merck III ion exchanger (OH⁻ form) were added to this solution. The mixture was heated for 24 hours at 40 °C with stirring. The solution was filtered (Büchner) and the filtrate was evaporated. After adding 100 ml water, the mixture was filtered again. The filtrate was freeze-dried. The yield was so low (158 mg) that characterisation was dispensed with. Various attempts to improve the result (a: repetition; b: extract resin with water, evaporate extract as well; c: rinse resin with methanol, evaporate methanol fraction as well; d: lower pH from 11 to 6 after reaction) gave no improvement.

### Example 7: Bleach activator test procedure

Mix the following solutions:
- 15 ml 0.6% hydrogen peroxide solution
- 10 ml saturated sodium pyrophosphate solution
- 10 ml 0.05% EDTA solution.
- Make up to 100 ml with demineralised water and heat to 30 °C.
- Add the heated mixture to an accurately weighed amount (75 - 90 mg) of bleach activator in a 600 ml glass beaker.
- Adjust the pH to 11.6 with 0.1 M NaOH solution.
- Precisely 4 minutes after the first addition add 30 ml 0.1% catalase solution.
- Adjust the pH to 10.5 with 0.5 M sulphuric acid solution and cool the solution to 0 - 3 °C.
- Precisely 6 minutes after the first addition add 15 ml 100% acetic acid solution and 15 ml 10% potassium iodide solution.
- Titrate the liberated iodine against a 0.1 M thiosulphate solution.
The mol% peracetic acid liberated from the bleach activator can be calculated from the quantity of thiosulphate solution required, 2 mmol thiosulphate corresponding to 1 mmol peracetic acid formed. The determinations were corrected for the loss of peracetic acid during the measurement. The correction factor for this loss is 1.10. The results of these determinations are given in Table 1.

## Claims

1. Use of a partially acylated fructan having a degree of substitution with acyl groups of 0.4 - 2.5 and a degree of substitution of less than 0.5 with other substituents as a bleach activator.

2. Use according to Claim 1, wherein the fructan is acylated with C₁-C₆ acyl groups.

3. Use according to Claim 1 or 2, wherein the fructan is acylated with a degree of substitution of 0.6 - 1.8.

4. Use according to one of Claims 1 - 3, wherein the fructan has an average chain length of 3 - 60, in particular 4 - 30.

5. Use according to one of Claims 1 - 4, wherein the degree of substitution of carboxymethyl groups is less than 0.2.

6. Use according to one of Claims 1 - 5, wherein the fructan is inulin.

7. Use according to one of Claims 1 - 6, wherein the fructan is acylated with acetyl and/or propionyl groups.

## Patentansprüche

1. Verwendung eines teilweise acylierten Fructans, das einen Substitutionsgrad mit Acylgruppen von 0,4 - 2,5 und einen Substitutionsgrad von weniger als 0,5 mit anderen Substituenten hat, als Bleichaktivator.

2. Verwendung gemäß Anspruch 1, wobei das Fructan mit C₁-C₆ Acylgruppen acyliert ist.

3. Verwendung gemäß Anspruch 1 oder 2, wobei das Fructan zu einem Substitutionsgrad von 0,6 - 1,8 acyliert ist.

4. Verwendung gemäß einem der Ansprüche 1 - 3, wobei das Fructan eine durchschnittliche Kettenlänge von 3 - 60, insbesondere 4 - 30, hat.

5. Die Verwendung gemäß einem der Ansprüche 1 - 4, wobei der Substitutionsgrad an Carboxymethylgruppen weniger als 0,2 ist.

6. Verwendung gemäß einem der Ansprüche 1 - 5, wobei das Fructan Inulin ist.

7. Verwendung gemäß einem der Ansprüche 1 - 6, wobei das Fructan mit Acetylund/oder Propionylgruppen acyliert ist.

## Revendications

1. Utilisation, en tant qu'activateur de blanchiment, d'un fructane partiellement acylé ayant un degré de substitution de 0,4 à 2,5 avec des groupes acyles et un degré de substitution inférieur à 0,5 avec d'autres substituants.

2. Utilisation selon la revendication 1, dans laquelle le fructane est acylé avec des groupes acyles en C₁ à C₆.

3. Utilisation selon la revendication 1 ou la revendication 2, dans laquelle le fructane est acylé avec un degré de substitution de 0,6 à 1,8.

4. Utilisation selon l'une quelconque des revendications 1 à 3, dans laquelle le fructane a une longueur de chaîne moyenne de 3 à 60, en particulier de 4 à 30.

5. Utilisation selon l'une quelconque des revendications 1 à 4, dans laquelle le degré de substitution des groupes carboxyméthyles est inférieur à 0,2.

6. Utilisation selon l'une quelconque des revendications 1 à 5, dans laquelle le fructane est l'inuline.

7. Utilisation selon l'une quelconque des revendications 1 à 6, dans laquelle le fructane est acylé avec des groupes acétyles et/ou propionyles.
